Europäisches Patentamt

European Patent Office

Office européen des brevets

(19)

(11) Publication number: **0 067 594**

**B1**

(12) **EUROPEAN PATENT SPECIFICATION**

(45) Date of publication of patent specification: **28.11.84**

(51) Int. Cl.³: **F 16 H 45/02**

(21) Application number: **82302766.9**

(22) Date of filing: **28.05.82**

(54) **Motor vehicle transmissions.**

(30) Priority: **01.06.81 JP 82520/81**

(43) Date of publication of application:
**22.12.82 Bulletin 82/51**

(45) Publication of the grant of the patent:
**28.11.84 Bulletin 84/48**

(84) Designated Contracting States:
**DE FR GB**

(56) References cited:
FR-A-2 441 763
US-A-2 707 887
US-A-3 068 974
US-A-4 027 554
US-A-4 051 932
US-A-4 056 177

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Nishikawa, Masao**
**912-1, Oizumigakuen-cho**
**Nerima-ku Tokyo (JP)**
Inventor: **Aoki, Takashi**
**15-51-514, Honcho**
**Wako-shi Saitama-ken (JP)**
Inventor: **Sakai, Shinzo**
**1-12-4 Minamidai**
**Kamifukuoka-shi Saitama-ken (JP)**
Inventor: **Yoshizawa, Hiroshi**
**437, Komabayashi**
**Kamifukuoka-shi Saitama-ken (JP)**

(74) Representative: **MacFarlane, John Anthony Christopher et al**
**HASELTINE LAKE & CO. Hazlitt House 28,**
**Southampton Buildings Chancery Lane**
**London WC2A 1AT (GB)**

Courier Press, Leamington Spa, England.

## Description

This invention relates to clutch control in a torque convertor in a motor vehicle transmission.

It is known that a torque convertor provided in a transmission for a vehicle such as an automatic transmission is provided with a clutch for transmitting mechanically torque from a pump side of the convertor to a turbine side thereof. It has been proposed that, in order to decrease slip loss at the torque convertor when a vehicle is cruising at high speed, and thus to reduce fuel consumption under these conditions, the clutch is, for instance, so arranged that operation thereof is controlled in conjunction with a shift-up operation of the transmission to a higher speed stage. With this arrangement, during driving at the high speed stage, the pump side and the turbine side of the convertor are directly interconnected mechanically so that slip by fluid torque transmission is not caused, but there is involved the inconvenience that a torque amplification function, which is the fundamental function of the torque convertor, cannot be obtained, and consequently acceleration and ability to cope with ascents when running at this high speed stage is poor.

It has been usual hitherto with this kind of apparatus that, as disclosed in US—A—2,707,887, for instance, control of operation of a clutch is carried out by a control valve which is applied with a prime mover output power signal and a vehicle running speed signal. In the present invention, however, in order that release characteristics and release preventing characteristics of a clutch which are varied in accordance with the kind of vehicle or prime mover may be easily satisfied, it is so arranged that the release characteristics and the release preventing characteristics are set, independently one from another, by a prime mover output power and a vehicle running speed, respectively.

According to the present invention, there is provided a motor vehicle transmission for connection between a prime mover and a driving road wheel and that comprises a torque convertor, a clutch for transmitting mechanically torque from a pump side to a turbine side of the torque convertor, and control mechanism for controlling operation of the clutch; and in which the control mechanism comprises a clutch release mechanism for operation to disengage the clutch in response to increase in prime mover output power to above a predetermined set value, and a clutch release preventing mechanism for operation to prevent or stop said operation of the release mechanism so that the clutch is engaged upon increase of vehicle running speed to above a predetermined set value; the clutch release mechanism comprising a first control valve interposed in an oil supply passage to the clutch and acted upon to close this passage to the clutch by pressure supplied through a first control line and constituting a prime mover output power signal; characterised in that the clutch release preventing mechanism comprises a second control valve interposed in the first control line and acted upon to close this control line from the first control valve by pressure supplied through a second control line as a vehicle speed signal.

The invention also provides a motor vehicle transmission for connection between a prime mover and a driving road wheel and that comprises a torque convertor, a clutch for transmitting mechanically torque from a pump side to a turbine side of the torque convertor, and control mechanism for controlling operation of the clutch; and in which the control mechanism comprises a clutch release mechanism for operation to disengage the clutch in response to increase in prime mover output power to above a predetermined set value, and a clutch release preventing mechanism for operation to prevent or stop said operation of the release mechanism so that the clutch is engaged upon increase of vehicle running speed to above a predetermined set value, characterised in that the transmission includes three forward stages; the clutch release mechanism and the clutch release preventing mechanism are operable only during vehicle running at the highest of these three stages; the clutch is operated by oil pressure also operative to engage a clutch of said highest stage; the clutch release mechanism comprises a first control valve interposed in an oil supply passage connected between these two clutches and acted upon to close this passage to the first-mentioned clutch by pressure supplied through a first control line and constituting a prime mover output power signal; and the clutch release preventing mechanism comprises a second control valve interposed in the first control line and acted upon to close this control line from the first control valve by pressure supplied through a second control line as a vehicle speed signal.

In addition, the invention provides a motor vehicle transmission for connection between a prime mover and a driving road wheel and that comprises a torque convertor a clutch for transmitting mechanically torque from a pump side to a turbine side of the torque convertor, and control mechanism for controlling operation of the clutch; and in which the control mechanism comprises a clutch release mechanism for operation to disengage the clutch in response to increase in prime mover output power to above a predetermined set value, and a clutch release preventing mechanism for operation to prevent or stop said operation of the release mechanism so that the clutch is engaged upon increase of vehicle running speed to above a predetermined set value; characterised in that the transmission includes three forward stages; the clutch release mechanism and the clutch release preventing mechanism are incapable of operating during vehicle running at the lowest of these three stages; the clutch release mechanism comprises a first control valve interposed in an oil supply passage to the clutch and acted upon to close this passage to the clutch by pressure supplied through a first control line and constituting a prime mover output power signal; and the clutch release preventing mechanism comprises a second control valve interposed in the first control line and acted upon to close this control line from the first control valve by pressure supplied through a second control line as a vehicle speed signal, and a further control valve interposed in the oil supply passage this control valve being urged normally to open this passage to the clutch and being moved to close this passage to the clutch by oil pressure also operative to engage a clutch of said lowest stage.

In each of the transmissions just defined the clutch for the torque convertor can be immediately disengaged at any time when it is desired to obtain a torque amplification function.

For a better understanding of the invention and to show how the same may be carried into effect, reference will now be made, by way of example, to the accompanying drawings, in which:—

Figure 1 is a schematic diagram of a motor vehicle transmission,

Figure 2 is a block diagram of a control mechanism of the transmission of Figure 1,

Figure 3 is a circuit diagram of one form of part of the mechanism of Figure 2,

Figure 4 is a diagram showing the operational characteristics of the control mechanism part shown in Figure 3,

Figure 5 is a circuit diagram similar to Figure 2 but of another form,

Figure 6 is a diagram showing the operational characteristics of the mechanism of Figure 5,

Figure 7 is a circuit diagram also similar to Figure 2 but of yet another form, and

Figure 8 is a diagram showing the operational characteristics of the mechanism of Figure 7.

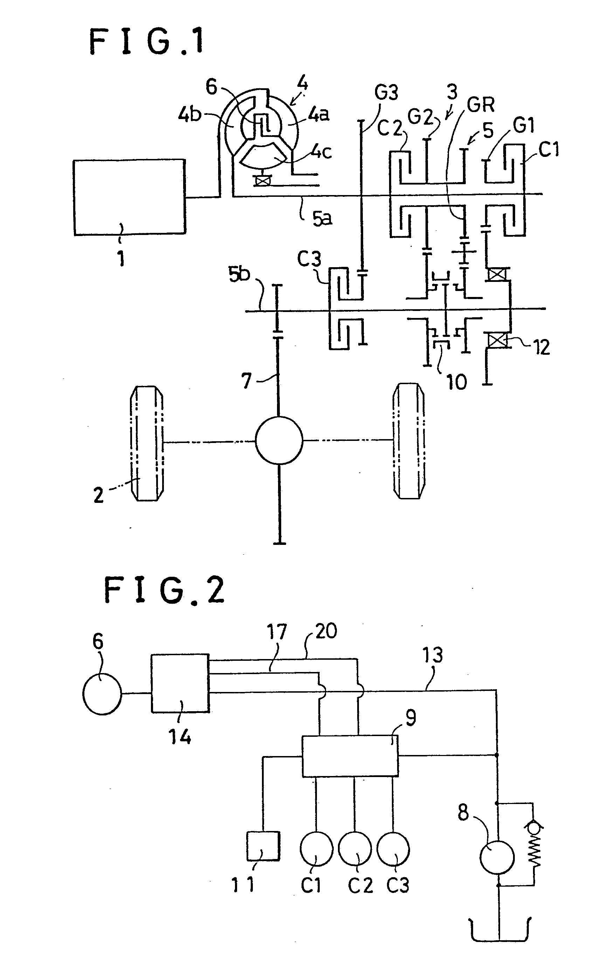

Referring first to Figure 1, numeral 1 denotes a prime mover that is an internal combustion engine, numeral 2 denotes one of two driving road wheels of a vehicle and numeral 3 denotes a transmission connecting the engine and the driving road wheels. The transmission 3 includes a torque convertor 4 and a sub-transmission 5 having a plurality of gears trains giving different speed ratios.

The torque convertor 4 is provided with a pump 4a connected directly to the engine 1, a turbine 4b driven by circulation of the internal fluid caused by the pump 4a and an intermediate stator 4c, and is additionally provided with a torque convertor clutch 6 for transmitting mechanically torque from the pump 4a side to the turbine 4b side.

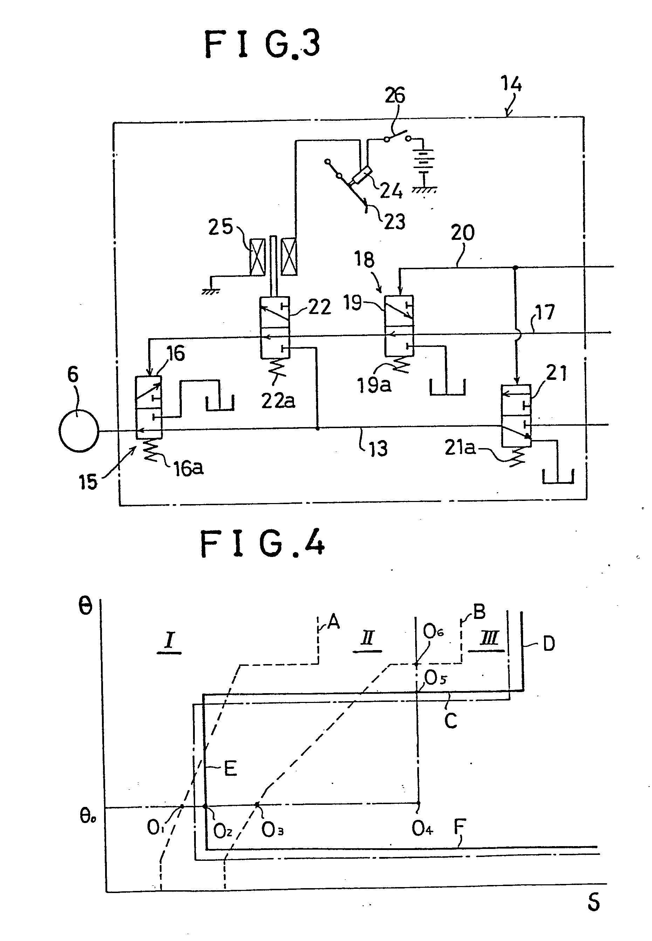

The subtransmission 5 has a change speed function of three forward stages and one reverse stage, and is provided, between an input shaft 5a connected to the turbine 4b and an output shaft 5b connected through a differential gear 7 to the driving road wheels 2, with gear trains G1, G2, G3 for first to third forward speeds and one reverse gear train GR. Respective oil pressure operated clutches C1, C2, C3 for the first to third speeds are interposed in the respective forward gear grains G1, G2, G3. These oil pressure operated clutches C1, C2, C3 are selectively supplied with pressure oil from an oil pressure source 8 through a change speed control mechanism 9 as shown in Figure 2, so that in accordance with change in the relation between vehicle running speed and degree of throttle opening, there can be obtained firstly first speed running by establishment of the first speed gear train G1 caused by oil supply to the first speed oil pressure operated clutch C1 in a region I in Figure 4, in which Figure the degree of throttle opening $\theta$ is plotted as abscissa against the vehicle running speed S as ordinate. Second speed running is obtained by establishment of the second speed gear train G2 caused by oil supply to the second speed oil pressure operated clutch C2 in a region II, separated by a dotted line A in Figure 4 from the region I. Third speed running is obtained by establishment of the third speed gear train G3 caused by oil supply to the third speed oil pressure operated clutch C3 in a region III, separated by a dotted line B in Figure 4 from the region II, which region II is thus bordered by the lines A and B.

In the illustrated example, the reverse gear train GR uses the second speed oil pressure operated clutch C2 in common with the second speed gear train G2, and is established in place of the gear train G2 by change-over operation of a selector gear 10 (Figure 1) for selecting one or other of the two gear trains GR, G2. The selector gear 10 is changed-over from a left-hand (Figure 1) second speed selected position to a right-hand (Figure 1) reverse gear selected position by operation of a control member 11 (Figure 2) such as a servo valve operated in conjunction with the change speed control mechanism 9.

At the time of changing from first speed to second speed, the two oil pressure operated clutches C1, C2 for first and second speed are both supplied with oil, and a smooth change speed operation is carried out by operation of a one-way clutch 12 interposed in the first speed gear train G1.

The arrangement of gear trains with their controlling clutches is not significantly different from known transmissions, and accordingly more detailed description of these parts will not be given.

As regards the clutch 6, this is controlled by a control mechanism 14 interposed in an oil supply passage 13 for supplying pressure oil to the clutch 6, this control mechanism 14 being provided with a clutch release mechanism 15 which is so operated due to an increase in engine output power to above a predetermined set value as to disengage the clutch 6.

In more detail, and referring to Figure 3, the clutch release mechanism 15 comprises a first control valve 16 interposed in the oil supply passage 13 and acted upon, to close the passage 13 from the clutch 6, by a throttle pressure supplied through a first control line 17 and constituting an engine output power signal that is in proportion to the degree of throttle opening as supplied from a known throttle valve provided in the change speed control mechanism 9. If the engine output power, that is, the degree of throttle opening, is increased to a value more than a predetermined set value shown by a horizontal line C in Figure 4, the valve 16 is moved to close the passage 13 from the clutch 6, against the action of a spring 16a, and thereby the oil supply to the torque convertor clutch 6 is cut off and this clutch is disengaged. The position of the line C is set in accordance with the kind of vehicle, and is desirably set at a comparatively low level in the case of a vehicle having an engine of comparatively low output power.

Additionally, in the illustrated example, there is provided a clutch release preventing mechanism 18 which is so operated due to an increase in vehicle speed to above a predetermined set value as shown by a vertical line D in Figure 4, as to prevent or stop the operation of the clutch release mechanism 15, so that the torque convertor clutch 6 can be brought to its engaged condition in a region to the right of the line D in Figure 4.

The clutch release preventing mechanism 18 includes a second control valve 19 interposed in the first control line 17 and acted upon to close this control line from the control valve 16 by a governor pressure supplied through a second control line 20 as a vehicle speed signal that is in proportion to vehicle speed as supplied from a known governor valve provided in the change speed control mechanism 9. When the vehicle speed is increased to beyond that represented by the line D, the valve 19 is moved to close the control line 17, from the control valve 16, against the action of a spring 19a, and thereby the action of the throttle pressure on the first control valve 16 serving as the clutch release mechanism 15 is cut off, and consequently the valve 16 is moved by the spring 16a to open the passage 13 to the clutch 6, whereby the oil supply to the clutch 6 is resumed and the clutch 6 is returned to its engaged condition. The line D may be set to be at a relatively low speed if the engine has a high power output which is large in relation to the weight of the vehicle body.

Also provided, in order that smooth acceleration from start may be obtained by holding the torque convertor clutch 6 disengaged when the vehicle speed is below a predetermined low speed as shown by a vertical line E in Figure 4, is a third control valve 21 that is urged to close the passage 13 from the clutch 6 by a spring 21a so that the oil supply to the clutch 6 is kept in a cut-off condition until the valve 21 is moved to open the passage 13 to the clutch 6 against the action of the spring 21a by the governor pressure supplied from second control line 20. The line E can be other than vertical, and may be set to be at any desired inclination, or can be curved.

Further, there is provided a fourth control valve 22 through which the oil pressure in the oil supply passage 13 can be caused to act on the first control valve 16 so as to cause this valve 16 to close the passage 13 from the clutch 6, against the action of the spring 16a, when the throttle valve degree of opening is in a region below a horizontal line F, so that when the degree of throttle opening is below a predetermined low degree as shown by the line F in Figure 4, the torque convertor clutch 6 is disengaged, and there is achieved saving in fuel consumption, and absorption of torque change, at the time of engine-braking operation. Also the possibility of the engine stalling at the time of rapid breaking on a slippery road is minimised. The fourth control valve 22 is interposed in the first control line 17 and is ordinarily held by the action of a spring 22a in a position in which the line 17 is open to the control valve 16. In the region which is below the line F wherein an accelerator pedal 23 is at an engine-idling position, for instance, a detector switch 24 for detecting the position of the pedal 23 is closed to energise a solenoid 25 and thereby the valve 22 is moved to a position in which the control line 17 is closed to the control valve 16 and instead the oil supply passage 13 is opened to the control valve 16 so that the oil pressure in the oil passage 13 acts to cause the control valve 16 to close the passage 13 to the clutch 6.

If the force exerted by the solenoid 25 is of sufficient strength, it can be arranged that the fourth control valve 22 is omitted and the first control valve 16 is moved directly by the solenoid 25 to close the passage 13 to the clutch 6.

Numeral 26 denotes a switch that is closed when an engine ignition switch is closed.

The first to fourth control valves 16, 19, 21, 22 are desirably snap-action valves having a hysteresis phenomenon on operation so that the control charactersitics for the clutch 6 are applied with a hysteresis as shown by a dot-dash line in Figure 4.

Operation in practice is as follows:—

When the vehicle is started under the condition that the accelerator pedal 23 is lightly pushed down and the degree of throttle opening is $\theta_0$ in Figure 4, firstly an increase in running speed with the first speed gear train established takes place. When the vehicle speed crosses the line A at a point $O_1$, under acceleration, shift-up to second speed is effected. When the vehicle speed crosses the line E at a point $O_2$, the torque convertor clutch 6 is engaged and thereafter when the vehicle speed crosses the line B at a point $O_3$ shift-up to third speed is effected. Finally a constant cruising speed is reached, at a point $O_4$, at which the road surface resistance and engine output power are balanced.

If, thereafter, when the vehicle approaches an upward incline, the accelerator pedal is further pushed down to increase the degree of throttle opening so as to maintain the constant cruising speed of the vehicle and the degree of throttle opening crosses the line C at a point $O_5$, the clutch 6 for the torque convertor is disengaged, so that a torque amplification function by the torque convertor 4 is effected, and if, as the incline becomes steeper, the degree of throttle opening reaches a point $O_6$ at which it goes beyond the line B, a shift-down to the second speed is effected.

In the case of such an acceleration that the vehicle is started under the condition that the degree of throttle opening is made above the line C by strongly pushing down the accelerator pedal, the shifting-up from first speed through second speed to third speed is effected while the clutch 6 is kept disengaged until, if the vehicle speed becomes so high that it is past the line D, the clutch 6 is engaged and thereafter any slipping at the torque convertor 4 is prevented, and there can be obtained a quiet high speed cruising with minimum engine noise and fuel consumption.

It will be understood from the above that the torque convertor clutch 6 is arranged to be engaged at a comparatively low vehicle speed shown by the line E, so that there can be expected a good quietness property and a favourable fuel saving property. Additionally, a clutch engaged region (within the area bounded by the lines F, E, C and D, that is to the right, in Figure 4) and a clutch disengaged region (outside, that is to the left of, the area bounded by the lines F, E, C and D in Figure 4) of the clutch are provided in each of the respective regions I, II, III for the first to third speeds so that the engine output power may be transmitted to the driving wheels while being controlled in six ways, and consequently there can be obtained a performance similar to a six stage change speed mechanism in spite of the fact that the apparatus is composed of the three stage change speed mechanism, and with the advantage that, as compared with a conventional six stage transmission, in which shift shocks are caused five times in the course of shifting from the lowest stage to the highest stage, shift shocks are caused only three times at the points $O_1$, $O_2$ and $O_3$ where the vehicle is started, for instance, at the degree of throttle opening $\theta_0$.

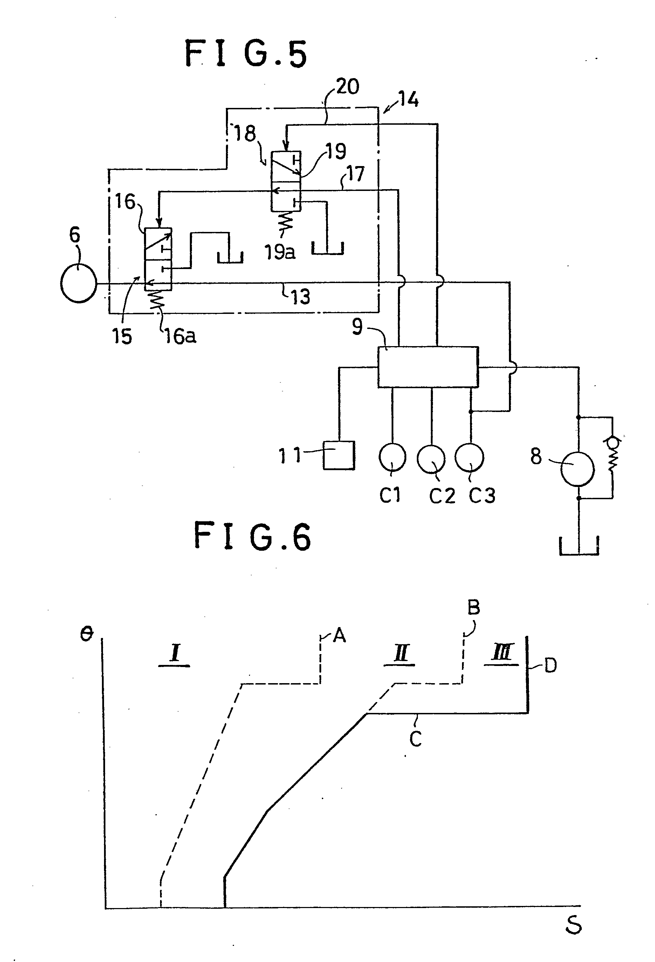

In the form of Figure 5 the oil supply passage 13 connected to the clutch 6 is supplied with oil pressure for operating the third speed oil pressure operated clutch $C_3$ so that the clutch 6 may be operated only at the time of third speed driving.

The clutch release mechanism 15 and the clutch release preventing mechanism 18 are of the construction already described. The operating characteristics are as shown in Figure 6. In particular the pressure in the control line 17 constitutes an engine output power signal; the pressure in the control line 20 constitutes a vehicle speed signal; the clutch engaged region is to the right, in Figure 6, of the thick lines including the lines C and D; and the clutch disengaged region is to the left of these thick lines.

This form is effective for a small-sized motorcar wherein the engine output power is small and the torque amplification function of the torque convertor 4 is required also for second speed driving.

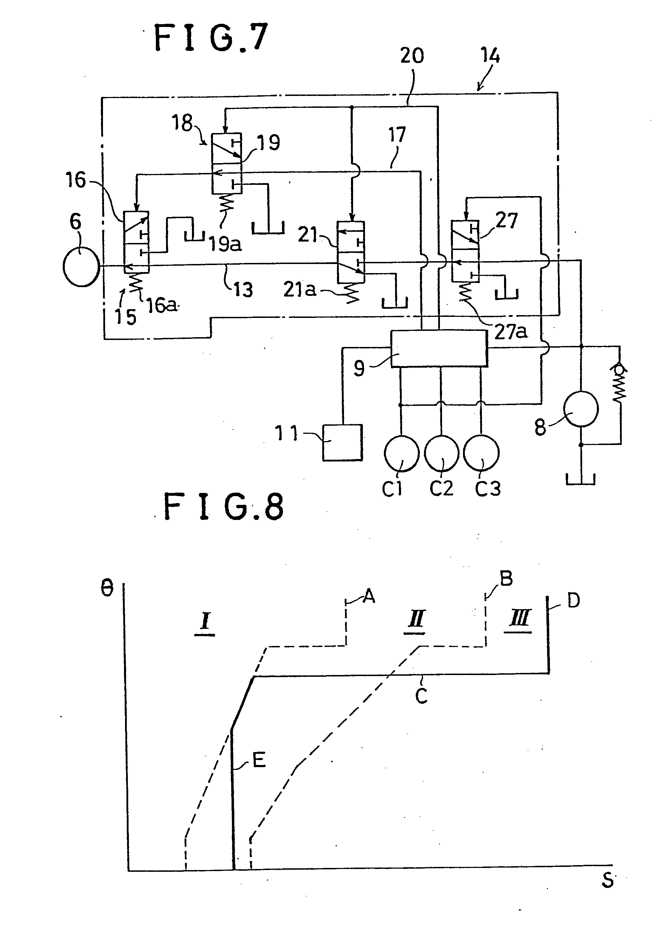

In the form of Figure 7, the form of Figure 3 is so modified that a fifth control valve 27 is interposed in the oil supply passage 13. This valve closes the passage 13 to the clutch 6, against the action of a spring 27a, by oil pressure operating the first speed oil pressure operated clutch $C_1$, so that the clutch 6 is not engaged during first speed driving. The operation charactersitics thereof are as shown in Figure 8 and, as before, the pressure in the control line 17 constitutes an engine output power signal; the pressure in the control line 20 constitutes a vehicle speed signal; the clutch engaged region is to the right, in Figure 8, of the thick lines including the lines E, C and D; and the clutch disengaged region is to the left of these thick lines.

In the form of Figure 7, a fourth control valve (22) is omitted.

If, in Figure 8, the line E is desired to be coincident with the line A, this can be attained by either omitting the third control valve 21 or by keeping this valve is in a passage 13 open condition, whereby the clutch 6 is engaged when driving with low load at second speed.

Although the described subtransmission 5 has an automatic change speed function comprising three forward stages, the clutch control described could be utilised in a semiautomatic mechanism or any mechanism having multi-stage change speed functions.

In the foregoing, the throttle pressure and the governor pressure obtained from the throttle valve and the governor valve provided in the change speed control mechanism 9 are used as the engine output power signal and the vehicle running speed signal, respectively, but it is also possible that these signals are obtained as electric signals and the foregoing control operations are effected by means of solenoid valves or the like. Furthermore, the engine output power may be changed into a signal by using another parameter such as engine intake negative pressure instead of the degree of throttle opening.

In all forms, in operation, the torque convertor clutch is disengaged upon increase in the engine output power to a value more than a predetermined set value, so that upon acceleration or climbing an ascent, even when the vehicle is cruising at its high speed stage, the clutch is immediately released and thereby a torque amplification function by the torque convertor can be obtained to improve the acceleration property or the climbing property. Additionally clutch release is prevented when driving at a predetermined high speed, so that favourable fuel consumption and silence properties can be obtained when cruising at high speed.

## Claims

1. A motor vehicle transmission for connection between a prime mover (1) and a driving road wheel (2) and that comprises a torque convertor (4), a clutch (6) for transmitting mechanically torque from a pump (4a) side to a turbine (4b) side of the torque convertor, and control mechanism (14) for controlling operation of the clutch; and in which the control mechanism (14) comprises a clutch release mechanism (15) for operation to disengage the clutch (6) in response to increase in prime mover output power to above a predetermined set value, and a clutch release preventing mechanism (18) for operation to prevent or stop said operation of the release mechanism (15) so that the clutch (6) is engaged upon increase of vehicle running speed to above a predetermined set value; the clutch release mechanism (15) comprising a first control valve (16) interposed in an oil supply passage (13) to the clutch (6) and acted upon to close this passage (13) to the clutch (6) by pressure supplied through a first control line (17) and constituting a prime mover output power signal; characterised in that the clutch release preventing mechanism (18) comprises a second control valve (19) interposed in the first control line (17) and acted upon to close this control line (17) from the first control valve (16) by pressure supplied through a second control line (20) as a vehicle speed signal.

2. A transmission as claimed in claim 1, wherein a third control valve (21) is interposed in the oil supply passage (13), this control valve (21) being urged normally to close this passage (13) from the clutch (6), and being moved to open this passage (13) to the clutch (6) by said pressure supplied through the second control line (20).

3. A transmission as claimed in claim 1 or 2, wherein a further control valve (22) is interposed in the first control line (17), this further control valve (22) being urged normally to open the first control line (17) to the first control valve (16), and being moved to close this control line (17) to the first control valve (16) in a prime mover (1) idling condition.

4. A transmission as claimed in claim 1, 2 or 3, wherein the transmission includes three forward stages, and wherein the clutch release mechanism (15) and the clutch release preventing mechanism (18) are operable during vehicle running at each of these three stages.

5. A motor vehicle transmission for connection between a prime mover (1) and a driving road wheel (2) and that comprises a torque convertor (4), a clutch (6) for transmitting mechanically torque from a pump (4a) side to a turbine (4b) side of the torque convertor, and control mechanism (14) for controlling operation of the clutch; and in which the control mechanism (14) comprises a clutch release mechanism (15) for operation to disengage the clutch (6) in response to increase in prime mover output power to above a predetermined set value, and a clutch release preventing mechanism (18) for operation to prevent or stop said operation of the release mechanism (15) so that the clutch (6) is engaged upon increase of vehicle running speed to above a predetermined set value; characterised in that the transmission includes three forward stages; the clutch release mechanism (15) and the clutch release preventing mechanism (18) are operable only during vehicle running at the highest of these three stages; the clutch (6) is operated by oil pressure also operative to engage a clutch ($C_3$) of said highest stage; the clutch release mechanism (15) comprises a first control valve (16) interposed in an oil supply passage (13) connected between these two clutches (6 and $C_3$) and acted upon to close this passage (13) to the first-mentioned clutch (6) by pressure supplied through a first control line (17) and constituting a prime mover output power signal; and the clutch release preventing mechanism (18) comprises a second control valve (19) interposed in the first control line (17) and acted upon to close this control line (17) from the first control valve (16) by pressure supplied through a second control line (20) as a vehicle speed signal.

6. A motor vehicle transmission for connection between a prime mover (1) and a driving road wheel (2) and that comprises a torque convertor (4), a clutch (6) for transmitting mechanically torque from a pump (4a) side to a turbine (4b) side of the torque convertor, and control mechanism (14) for controlling operation of the clutch; and in which the control mechanism (14) comprises a clutch release mechanism (15) for operation to disengage the clutch (6) in response to increase in prime mover output power to above a predetermined set value, and a clutch release preventing mechanism (18) for operation to prevent or stop said operation of the release mechanism (15) so that the clutch (6) is engaged upon increase of vehicle running speed to above a predetermined set value; the clutch release mechanism (15) comprising a first control valve (16) interposed in an oil supply passage (13) to the clutch (6) and acted upon to close this passage (13) to the clutch (6) by pressure supplied through a first control line (17) and constituting a prime mover output power signal; characterised in that the transmission includes three forward stages; the clutch release mechanism (1) and the clutch release preventing mechanism (18) are incapable of operating during vehicle running at the lowest of these three stages; and the clutch release preventing mechanism (18) comprises a second control valve (19) interposed in the first control line (17) and acted upon to close this control line (17) from the first control valve (16) by pressure supplied through a second control line (20) as a vehicle speed signal, and a further control valve (27) interposed in the oil supply passage (13), this control valve (27) being urged normally to open this passage (13) to the clutch (6) and being moved to close this passage (13) to the clutch (6) by oil pressure also operative to engage a clutch ($C_1$) of said lowest stage.

7. A transmission as claimed in claim 6, wherein the clutch release preventing mechanism (18) comprises another control valve (21) interposed in the oil supply passage (13), this control valve (21) being urged normally to close this passage (13) from the first-mentioned clutch (6) and being moved to open this passage (13) to the first-mentioned clutch (6) by said pressure supplied through the second control line (20).

**Revendications**

1. Transmission pour véhicule à moteur destinée à être montée entre un générateur de force motrice (1) et une roue motrice (2) et comprenant un convertisseur de couple (4), un embrayage (6) pour transmettre mécaniquement le couple d'un côté pompe (4a) à un côté turbine (4b) du convertisseur de couple, et un mécanisme de commande (14) pour commander le fonctionnement de l'embrayage; et dans laquelle le mécanisme de commande (14) comprend un mécanisme de débrayage (15) destiné à débrayer l'embrayage (6) en réponse à une augmentation de la puissance de sortie du générateur de force motrice au-delà d'une valeur prédéterminée, et un mécanisme d'empéchement du débrayage (18) destiné à empêcher ou interrompre ledit fonctionnement du mécanisme de débrayage (15) de façon á ce que l'embrayage (6) soit embrayé lors d'une augmentation de la vitesse du véhicule au-delà d'une valeur prédéterminée; le mécanisme de débrayage (15) comprenant un premier clapet de commande (16) disposé dans un passage d'alimentation en huile (13) de l'embrayage (6) et sur lequel on agit pour fermer ce passage (13) vers l'ambrayage (6) au moyen d'une pression fournie par l'intermédiaire d'une première canalisation de commande (17) et constituant un signal de puissance de sortie du générateur de force motrice; caractérisée en ce que le mécanisme d'empêchement du débrayage 8) comprend un second clapet de commande (19) disposé dans la première canalisation de commande (17) et sur lequel on agit pour fermer cette canalisation de commande (17) à partir du premier clapet de commande (16) au moyen d'une pression fournie par l'intermédiaire d'une seconde canalisation de commande (20) en tant que signal indicateur de la vitesse du véhicule.

2. Transmission selon la revendication 1, caractérisé en ce qu'un troisième clapet de commande (21) est disposé dans le passage d'alimentation en huile (13), ce clapet de commande (21) étant normalement actionné pour fermer ce passage (13) en provenance de l'embrayage (6) et étant actionné pour ouvrir ce passage (13) vers l'embrayage (6) au moyen de ladite pression fournie par l'intermédiaire de la seconde canalisation de commande (20).

3. Transmission selon la revendication 1 ou 2, caractérisée en ce qu'on dispose un autre clapet de commande (22) dans la première canalisation de commande (17), cet autre clapet de commande (22) étant normalement actionné pour ouvrir la première canalisation de commande (17) vers le premier clapet de commande (16) et étant actionné pour fermer cette canalisation de commande (17) vers le premier clapet de commande (16) lorsque le générateur de force motrice (1) fonctionnne au ralenti.

4. Transmission selon l'une quelconque des revendications, 1 à 3, caractérisée en ce que la transmission comprend trois rapports avant, et en ce que le mécanisme de débrayage (15) et le mécanisme d'empêchement du débrayage (18) peuvent fonctionnner lorsque le véhicule roule sur chacun de ces trois rapports.

5. Transmission pour véhicule à moteur destinée à être montée entre un générateur de force motrice (1) et une roue motrice (2) et comprenant un convertisseur de couple (4), un embrayage (6) pour transmettre mécaniquement le couple d'un côté pompe (4a) à un côté turbine (4b) du convertisseur de couple, et un mécanisme de commande (14) pour commander le fonctionnement de l'embrayage; et dans laquelle le mécanisme de commande (14) comprend un mécanisme de débrayage (15) ayant pour rôle de débrayer l'embrayage (6) en réponse à une augmentation de la puissance de sortie du générateur de force motrice au-delà d'une valeur prédéterminée, et un mécanisme d'empêchement du débrayage (18) destiné á empêcher ou interrompre ledit fonctionnement du mécanisme de débrayage (15) de façon à ce que l'embrayage (6) soit embrayé lors d'une augmentation de la vitesse de roulement du véhicule au-delà d'une valeur prédéterminée; caractérisé en ce que la transmission comporte trois rapports avant; en ce que le mécanisme de débrayage (15) et le mécanisme d'empêchement du débrayage (18) ne peuvent fonctionner que lorsque le véhicule roule à la plus élevée de ces trois vitesses; en ce que l'embrayage (6) est actionné par une pression d'huile agissant également pour embrayer un embrayage (C3) dudit rapport le plus élevé; en ce que le mécanisme de débrayage (15) comprend un premier clapet de commande (16) disposé dans un passage d'alimentation en huile (13) reliant ces deux embrayages (6 et C3) et sur lequel on agit pour fermer ce passage (13) vers l'embrayage mentionné en premier lieu (6) au moyen d'une pression fournie par l'intermédiaire d'une première canalisation de commande (17) et constituant un signal de puissance de sortie du générateur de force motrice; et en ce que le mécanisme d'empêchement du débrayage (18) comprend un second clapet de commande (19) disposé dans la première canalisation de commande (17) et actionné pour fermer cette canalisation de commande (17) à partir du premier clapet de commande (16) au moyen d'une pression fournie par intermédiaire d'une seconde canalisation de commande (20), en tant que signal indicateur, de la vitesse du véhicule.

6. Transmission pour véhicule à moteur destinée à être montée entre un générateur de force motrice (1) et une roue motrice (2) et comprenant un convertisseur de couple (4), un embrayage (6) pour transmettre mécaniquement le couple d'un côté pompe (4a) vers un côté turbine (4b) du convertisseur de couple, et un mécanisme de commande (14) pour commander le fonctionnement de l'embrayage; et dans laquelle le mécanisme de commande (14) comprend un mécanisme de débrayage (15) ayant pour rôle de débrayer l'embrayage (6) en réponse à une augmentation de la puissance de sortie du générateur de force motrice au-delà d'une valeur prédéterminée, et un mécanisme d'empêchement du débrayage (18) destiné à empêcher ou interrompre ledit fonctionnement du mécanisme de débrayage (15) de façon à ce que l'embrayage (6) soit embrayé lors d'une augmentation de la vitesse de roulement du véhicule au-delà d'une valeur prédéterminée; le mécanisme de débrayage (15) comprenant un premier clapet de commande (16) disposé dans un passage d'alimentation en huile (13) de l'embrayage (6) et actionné pour fermer ce passage (13) vers l'embrayage (6) au moyen d'une pression fournie par l'intermédiaire d'une première canalisation de commande (17) et constituant un signal de puissance de sortie du générateur de force motrice; caractérisée en ce que la transmission comporte trois rapports avant; en ce que le mécanisme de débrayage (15) et le mécanisme d'empéchement du débrayage (18) sont incapables de fonctionner lorsque le véhicule roule à la plus faible de ces trois vitesses; et en ce que le mécanisme d'empéchement du débrayage (18) comprend un second clapet de commande (19) disposé dans la première canalisation de commande (17) et actionné pour fermer cette canalisation de commande (17) à partir du premier clapet de commande (16) au moyen d'une pression fournie par l'intermédiaire d'une seconde canalisation de commande (20) en tant que signal indicateur de la vitesse du véhicule, et un autre clapet de commande (27) disposé dans le passage d'alimentation en huile (13), ce clapet de commande (27) étant normalement actionné pour ouvrir ce passage (13) vers l'embrayage (6) et étant actionné pour fermer ce passage (13) vers l'embrayage (6) au moyen d'une pression d'huile agissant egalement pour embrayer un embrayage (C1) dudit rapport le plus faible.

7. Transmission selon la revendication 6, caractérisé en ce que le mécanisme d'empéchement de débrayage (18) comprend un autre clapet de commande (21) disposé dans le passage d'alimentation en huile (13), ce clapet de commande (21) étant normalement actionné pour fermer ce passage (13) à partir de l'embrayage mentionné en premier lieu (6) et étant actionné pour ouvrir ce passage (13) vers l'embrayage mentionné en premier lieu (6) au moyen de ladite pression fournie par l'intermédiaire de la seconde canalisation de commande (20).

**Patentansprüche**

1. Kraftübertragung für ein Motorfahrzeug zur Herstellung einer Verbindung zwischen einem Hauptantrieb (1) und einem treibenden Straßenrad (2), wobei die Kraftübertragung einen Drehmomentwandler (4), eine von der Seite einer Pumpe (4a) des Drehmomentwandlers ein Drehmoment mechanisch auf die Seite einer Turbine (4b) des Drehmomentwandlers übertragende Kullung (6) und eine die Betätigung der Kupplung steuernde Steuereinrichtung (14) aufweist und die Steuereinrichtung (14) eine beim Übersteigen eines vorbestimmten Einstellwertes der Ausgangsleistung des Hauptantriebes die Kupplung (6) ausrückende Kupplungsausrückeinrichtung (15) und eine das Ausrücken der Kupplung verhindernde Einrichtung (18) aufweist, die das Arbeiten der Ausrückeinrichtung (15) solcherart verhindert oder abbricht, daß die Kupplung (6) beim Überschreiten eines vorbestimmten Einstellwertes der Fahrgeschwindigkeit des Fahrzeugs eingerückt wird, und wobei die Kupplungsausrückeinrichtung (15) ein in einer Ölzufuhrleitung (13) zur Kupplung (6) eingeschaltetes erstes Steuerventil (16) aufweist, das diese Leitung (13) zur Kupplung (6) unter Einwirkung eines Druckes schließt, der über eine erste Steuerleitung (17) zugeführt wird und ein signal für die Ausgangsleistung des Hauptantriebs bildet, dadurch gekennzeichnet, daß die das Ausrücken der Kupplung verhindernde Einrichtung (18) ein in die erste Steuerleitung (17) eingeschaltetes zweites Steuerventil (19) aufweist, das diese Steuerleitung (17) vom ersten Steuerventil (16) unter der Wirkung eines Druckes schließt, der über eine zweite Steuerleitung (20) als ein Fahrzeuggeschwindigkeitssignal zugeführt wird.

2. Kraftübertragung nach Anspruch 1, worin ein drittes Steuerventil (21) in die Ölzufuhrleitung (13) eingeschaltet ist und dieses Steuerventil (21) normalerweise im Sinne des Schließens dieser Leitung (13) von der Kupplung (6) belastet ist und im Sinne des Öffnens dieser Leitung (13) zur Kupplung (6) durch den über die zweite Steuerleitung (20) zugeführten Druck bewegt wird.

3. Kraftübertragung nach Anspruch 1 oder 2, worin ein weiteres Steuerventil (22) in die erste Steuerleitung (17) eingeschaltet ist und dieses weitere Steuerventil (22) normalerweise im Sinne des Öffnens der ersten Steuerleitung (17) zum ersten Steuerventil (16) belastet ist und unter Leeraufbedingung des Hauptantriebs (1) im Sinne des Schießens dieser Steuerleitung (17) zum ersten Steuerventil (16) bewegt wird.

4. Kraftübertragung nach Anspruch 1, 2 oder 3, worin die Kraftübertragung drei Vorwärtsgänge aufweist und worin die Kupplungsausrückeinrichtung (15) und die das Ausrücken der Kupplung verhindernde Einrichtung (18) bei laufendem Fahrzeug in jedem der drei Vorwatsgänge betätigbar sind.

5. Kraftübertragung für ein Motorfahrzeug zur Herstellung einer Verbindung zwischen einem Hauptantrieb (1) und einem treibenden Straßenrad (2), wobei die Kraftübertragung einen Drehmomentwandler (4), eine von der Seite einer Pumpe (4a) des Drehmomentwandlers ein Drehmoment mechanisch auf die Seite einer Turbine (4b) des Drehmomentwandlers übertragende Kupplung (6) und eine die Betätigung der Kupplung steuernde Steuereinrichtung (14) aufweist und die Steuereinrichtung (14) eine beim Übersteigen eines vorbestimmten Einstellwertes der Ausgangsleistung des Hauptantriebes die Kupplung (6) ausrückende Kupplungsausrückeinrichtung (15) und eine das Ausrücken der Kupplung verhindernde Einrichtung (18) aufweist, die das Arbeiten der Ausrückeinrichtung (15) solcherart verhindert oder abbricht, daß die Kupplung (6) beim Überschreiten eines vorbestimmten Einstellwertes der Fahrgeschwindigkeit des Fahrzeugs eingerückt wird, dadurch gekennzeichnet, daß die Kraftübertragung drei Vorwärtsgänge aufweist und die Kupplungsausrückeinrichtung (15) und die das Ausrücken der Kupplung verhindernde Einrichtung (18) nur dann betätigbar sind wenn das Fahrzeug mit dem höchsten dieser drei Vorwärtsgänge fährt, wobei die Kupplung (6) durch Öldruck betätigt wird, der auch eine Kupplung (C₃) des höchsten Vorwärtsganges einrückt, und wobei die Kupplungsausrückeinrichtung (15) ein erstes Steuerventil (16) aufweist, das in eine zwischen diesen zwei Kupplungen (6 und C₃) geschaltete Ölzufuhrleitung (13) eingeschaltet ist und im Sinne des Schließens dieser Leitung (13) zur ersterwähnten Kupplung (6) durch den über eine erste Steuerleitung (17) zugeführten und ein Signal für die Ausgangsleistung des Hauptantribes bildenden Druck beaufschlagt wird, und wobei ferner die das Ausrücken der Kupplung verhindernde Einrichtung (18) ein zweites Steuerventil (19) aufweist, das in die erste Steuerleitung (17) eingeschaltet ist und im Sinne des Schließens dieser Steuerleitung (17) vom ersten Steuerventil (16) durch den über eine zweite Steuerleitung (20) zugeführten und ein Signal für die Fahrzeuggeschwindigkeit bildenden Druck beaufschlagt wird.

6. Kraftübertragung für ein Motorfahrzeug zur Herstellung einer Verbindung zwischen einem Hauptantrieb (1) und einem treibenden Straßenrad (2), wobei die Kraftübertragung einen Drehmomentwandler (4), eine von der Seite einer Pumpe (4a) des Drehmomentwandlers ein Drehmoment mechanisch auf die Seite einer Turbine (4b) des Drehmomentwandlers übertragende Kupplung (6) und eine die Betätigung der Kupplung steuernde Steuereinrichtung (14) aufweist und die Steuereinrichtung (14) eine beim Übersteigen eines vorbestimmten Einstellwertes der Ausgangsleistung des Hauptantriebes die Kupplung (6) ausrückende Kupplungsausrückeinrichtung (15) und eine das Ausrücken der Kupplung verhindernde Einrichtung (18) aufweist, die das Arbeiten der Ausrückeinrichtung (15) solcherart verhindert oder abbricht, daß die Kupplung (6) beim Überschreiten eines vorbestimmten Einstellwertes der Fahrgeschwindigkeit des Fahrzeugs engerückt wird, und wobei die Kupplungsausrückeinrichtung (15) ein in einer Ölzufuhrleitung (13) zur Kupplung (6) eingeschaltetes erstes Steuerventil (16) aufweist, das diese Leitung (13) zur Kupplung (6) unter Einwirkung eines Druckes schließt, der über eine erste Steuerleitung (17) zugeführt wird und ein Signal für die Ausgangsleistung des Hauptantriebs bildet, dadurch gekennzeichnet, daß die Kraftübertragung drei Vorwärtsgänge aufweist und die Kupplungsausrückeinrichtung (15) und die das Ausrücken der Kupplung verhindernde Einrichtung (18) bei im niedrigsten dieser drei Vorwärtsgänge fahrendem Fahrzeug arbeitsunfähig sind, wobei die das Ausrücken der Kupplung verhindernde Einrichtung (18) ein zweites Steuerventil (19) aufweist, das in die erste Steuerleitung (17) eingeschaltet ist und im Sinne des Schließens dieser Steuerleitung (17) vom ersten Steuerventil (16) durch den über eine zweite Steuerleitung (20) zugeführten Druck betätigt wird, der ein Signal für die Fahrzeuggeschwindigkeit bildet, und wobei in die Ölzufuhrleitung (13) ein weiteres Steuerventil (27) eingeschaltet ist und dieses Steuerventil (27) normalerweise im Sinne des Öffnens dieser Leitung (13) zur Kupplung (6) belastet ist und im Sinne des Schließens dieser Leitung (13) zur Kupplung (6) durch Öldruck bewegt wird, der auch das Einrücken einer Kupplung (C₁) im erwähnten niedrigsten Vorwärtsgang bewirkt.

7. Kraftübertragung nach Anspruch 6, worin die das Ausrücken der Kupplung verhindernde Einrichtung (18) ein in die Ölzufurhleitung (13) eingeschaltetes weiteres Steuerventil (21) aufweist und dieses Steuerventil (21) normalerweise im Sinne des Schließens dieser Leitung (13) von der ersterwähnten Kupplung (6) belastet ist und im Sinne des Öffnens dieser Leitung (13) zur ersterwähnten Kupplung (6) durch den über die zweite Steuerleitung (20) zugeführten Druck bewegt wird.

# FIG.1

# FIG.2

# F I G.3

# F I G.4

# FI G.5

# FI G.6

# F I G.7

# F I G.8

4